# FASCICULE DE BREVET EUROPEEN

(11) **EP 0 403 396 B1**
(45) Date de publication et mention de la délivrance du brevet: **02.03.1994**
(21) Numéro de dépôt: 90401689.6
(22) Date de dépôt: 15.06.1990
(51) Int. Cl.: G06F 11/00, G06F 1/24

(54) **Dispositif de surveillance du fonctionnement d'un microcontrôleur ou microprocesseur**
Einrichtung zur Überwachung des Betriebs eines Mikrokontrollers oder Mikroprozessors
Device for monitoring the operation of a microcontroller or microprocessor

(30) Priorité: 16.06.1989 FR 8908023
(43) Date de publication de la demande: 19.12.1990
(73) Titulaire: JAEGER, F-92303 Levallois-Perret (FR)
(72) Inventeur: Roussel, Pierre, F-92200 Neuilly S/Seine (FR)
(74) Mandataire: Martin, Jean-Jacques

(56) Documents cités:
- EP-A- 0 266 837
- DE-A- 2 946 081
- US-A- 4 347 608
- US-A- 4 705 970

## Description

La présente invention concerne un dispositif de surveillance du fonctionnement d'un microcontrôleur ou microprocesseur, en particulier mais non exclusivement pour application aux véhicules automobiles.

On sait que les microcontrôleurs et microprocesseurs délivrent généralement sur l'une de leur sortie, un signal de contrôle dont la fréquence dépend du fonctionnement du microcontrôleur ou microprocesseur, c'est-à-dire du déroulement de la programmation.

On a déjà proposé de nombreux dispositifs de surveillance du fonctionnement d'un microcontrôleur ou microprocesseur, sensibles à ce signal de contrôle. Ces dispositifs sont dénommés généralement "chien de garde". La fonction essentielle de ces dispositifs de surveillance est de détecter toute anomalie éventuelle par surveillance de la fréquence du signal de contrôle et réinitialiser le microprocesseur ou microcontrôleur si nécessaire.

Une telle surveillance est particulièrement utile lorsque les microcontrôleurs ou microprocesseurs sont utilisés dans des environnements fortement perturbés par des parasites électromagnétiques, comme cela est le cas notamment dans les véhicules automobiles.

On a proposé tout d'abord, comme décrit par exemple dans les documents DE-A-2903638, DE-A-3214006 et DE-A-3035896, des circuits permettant de vérifier que la fréquence du signal de contrôle ne tombe pas sous un seuil représentatif d'un fonctionnement normal limite. L'efficacité de ces dispositifs de surveillance, qui se contentent de comparer la fréquence du signal de contrôle à un seuil, laisse cependant à désirer.

On a également proposé pour surveiller le fonctionnement d'un microcontrôleur ou microprocesseur, comme décrit dans les documents JP-A-57108938, JP-A-57 108939 et DE-A-3240704, des circuits plus performants conçus pour vérifier que la fréquence du signal de contrôle tombe dans une plage définie de fonctionnement normal.

Les circuits proposés à cet effet sont en général formés de deux monostables qui présentent des temps de basculement correspondant respectivement à la période minimale et à la période maximale admissibles en fonctionnement normal du signal de contrôle généré par le microprocesseur.

Ces dispositifs connus présentent cependant différents inconvénients. Ils permettent de surveiller que la période de certains signaux tombent dans une plage donnée, mais ne permettent pas de surveiller le format de ces signaux. Le réglage des périodes de consigne minimales et maximales, donc de la plage de contrôle est limitée.

Le document US-A-4347608 décrit un système d'auto-contrôle pour un équipement processeur électronique. Le système de contrôle comprend une mémoire ROM mémorisant une pluralité de microprogrammes dans des zones individuelles adressables par le processeur. Lors de la réception d'une adresse mémoire, un circuit de cadencement est activé pour déterminer la fréquence d'impulsions commandant un compteur qui appelle des phases successives du microprogramme sélectionné. Des mots code lus au cours de ces phases et provenant d'un réseau logique associé au processeur sont appliqués à ce dernier en vue d'une comparaison avec les contenus correspondants de la mémoire de programme. Dans le cas de non concordance, ou encore en cas de défaut du processeur ne générant pas de signal de remise à zéro susceptible d'empêcher le compteur d'atteindre le maximum de sa capacité, un indicateur d'alarme est actionné. Selon le document US-A-4347608 l'unité de contrôle comprend un oscillateur qui délivre un signal de cadencement de fréquence constante et connue, un diviseur de fréquence programmable qui reçoit en entrée le signal de cadencement et délivre à sa sortie un signal d'horloge, et le compteur précité recevant le signal d'horloge.

La présente invention a maintenant pour but de proposer un nouveau dispositif de surveillance qui élimine les inconvénients des dispositifs antérieurs.

Un but auxiliaire de la présente invention est de proposer un circuit intégrable dans un boîtier unique.

Un autre but auxiliaire de la présente invention est de proposer un dispositif plus précis que les dispositifs antérieurs à deux monostables.

Un autre but auxiliaire de la présente invention est de proposer un dispositif de surveillance autorisant un réglage aisé et assez large de la plage de fréquence autorisée.

Ce but est atteint, selon la présente invention grâce à un dispositif de surveillance du type connu comprenant :
- un oscillateur qui délivre un signal de cadencement de fréquence constante et connue,
- un diviseur de fréquence programmable qui reçoit en entrée le signal de cadencement et délivre à sa sortie un signal d'horloge, et
- un compteur recevant le signal d'horloge, caractérisé par le fait que :
- le compteur recevant le signal d'horloge HC, définit trois drapeaux TM, DBF1, FINF pour chaque impulsion du signal de contrôle correspondant respectivement à un nombre prédéterminé d'impulsions d'horloge HC reçues ;
   le drapeau TM représentant un temps mort pendant lequel le signal de contrôle SM peut prendre un état quelconque ;
   le drapeau DBF1 représentant la période minimale autorisée ;
   le drapeau FINF représentant la période maximale autorisée ;
- et par le fait qu'il comprend un contrôleur d'évènement recevant les drapeaux TM, DBF1, FINF et le signal de contrôle, qui contrôle que le signal de contrôle
   - est au niveau inactivé lors de la validation du drapeau TM pour générer un signal RESET dans le cas contraire ;
   - ne passe pas au niveau activé avant la validation du drapeau DBF1 pour générer un signal RESET dans le cas contraire ;
   - passe au niveau activé entre la validation des drapeaux DBF1 et FINF pour opérer une remise à zéro du compteur lors d'une telle détection et pour générer un signal RESET si la validation du drapeau FINF intervient avant le passage du signal de contrôle SM au niveau activé.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique générale des blocs fonctionnels essentiels d'un dispositif de surveillance conforme à la présente invention,
- les figures 2A et 2B, complémentaires, représentent un mode de réalisation d'un module diviseur de fréquence conforme à la présente invention,
- les figures 3A et 3B, complémentaires, représentent un mode de réalisation d'un compteur générant des fenêtres temporelles conforme à la présente invention,
- les figures 4A et 4B, complémentaires, représentent un mode de réalisation d'un module contrôleur d'évènement conforme à la présente invention,
- la figure 5 représente un chronogramme des principaux signaux intervenant dans le dispositif de surveillance conforme à la présente invention,
- la figure 6 représente un tableau de la durée de différentes fenêtres temporelles générées par le compteur, en fonction d'une programmation externe, et
- les figures 7 à 13 représentent différents cas d'application du dispositif de surveillance conforme à la présente invention.

### STRUCTURE GENERALE DU DISPOSITIF DE SURVEILLANCE

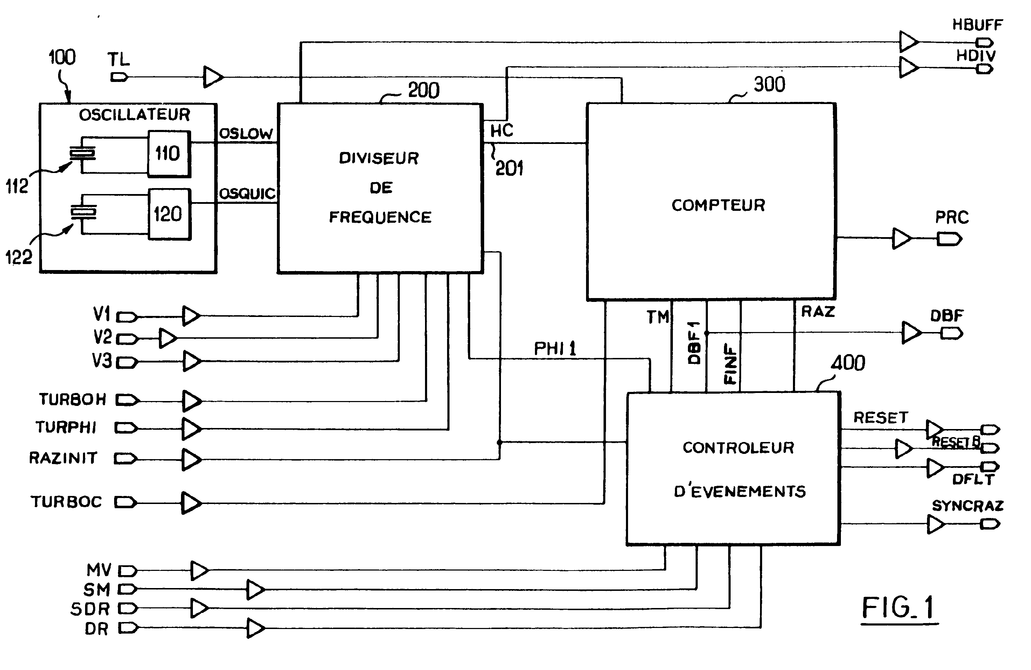

On retrouve sur la figure 1 annexée les quatre blocs fonctionnels principaux du dispositif de surveillance conforme à la présente invention, précédemment indiqués : un oscillateur 100, un diviseur de fréquence 200, un compteur 300 et un contrôleur d'évènement 400.

L'oscillateur 100 a pour fonction de délivrer un signal de cadencement de fréquence constante et connue.

Le diviseur de fréquence 200 est programmable. Il reçoit en entrée le signal de cadencement généré par l'oscillateur 100 et délivre à sa sortie 201 un signal d'horloge HC dont la période est liée à la période minimale autorisée pour le signal de contrôle du microcontrôleur ou du microprocesseur.

Le compteur 300 reçoit le signal d'horloge HC et génère à partir de celui-ci des fenêtres temporelles. Ces fenêtres temporelles sont identifiées par la validation de drapeaux sur les sorties TM, DBF1 et FINF du compteur, c'est-à-dire un passage au niveau haut de ces sorties.

Enfin, le contrôleur d'évènement 400 reçoit le signal de contrôle provenant du microcontrôleur ou microprocesseur et surveille l'état de ce signal de contrôle pendant les fenêtres temporelles générées par le compteur 300. Le signal de contrôle généré par le microcontrôleur ou microprocesseur est référencé SM sur les figures annexées.

En cas d'anomalie constatée, c'est-à-dire lorsque la période du signal de contrôle SM sort d'une plage définie, le contrôleur d'évènement 400 génère un signal de remise à zéro du microcontrôleur ou microprocesseur sur sa sortie RESET.

On va maintenant décrire la structure de chacun des quatre modules précités, avant d'évoquer le fonctionnement du dispositif.

### OSCILLATEUR 100

De préférence, comme représenté schématiquement sur la figure 1, le module oscillateur 100 comprend en fait deux oscillateurs 110, 120, associés à des quartz respectifs 112, 122, et reliés respectivement aux bornes d'entrée OSLOW et OSQUIC du diviseur de fréquence 200. Ces oscillateurs 110, 120 peuvent travailler par exemple dans la gamme de fréquence de 2 à 20 MHz pour l'oscillateur 110 et dans la gamme de 20 à 32 MHz pour l'oscillateur 120. Un seul des deux oscillateurs 110, 120 est mis en service pour piloter le circuit de surveillance. Le choix de l'oscillateur à mettre en service dépend de la fréquence du signal de contrôle généré par le microcontrôleur ou microprocesseur à surveiller.

### DIVISEUR DE FREQUENCE 200

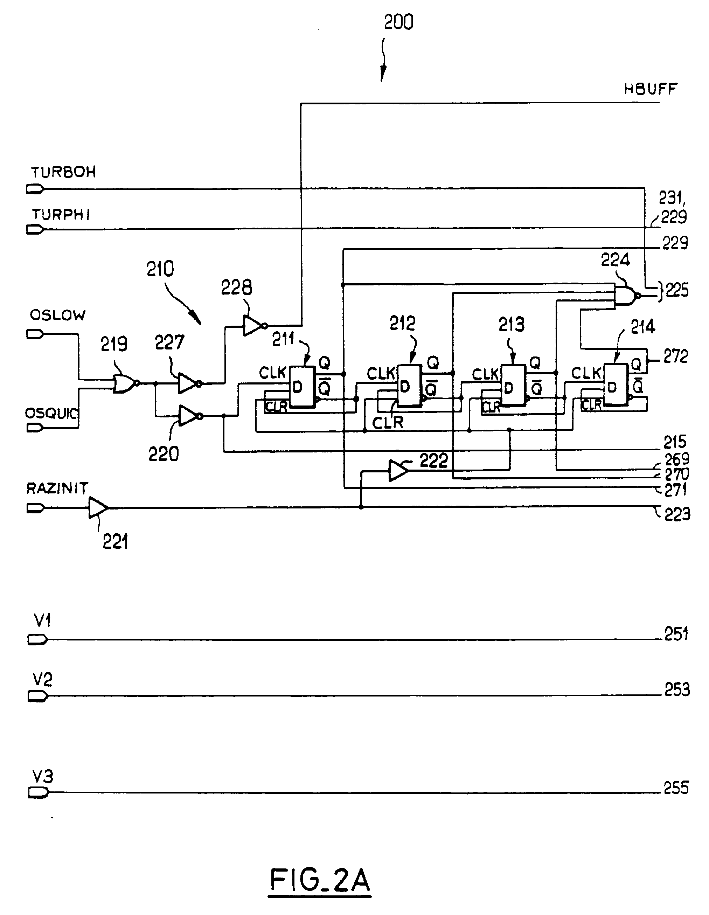

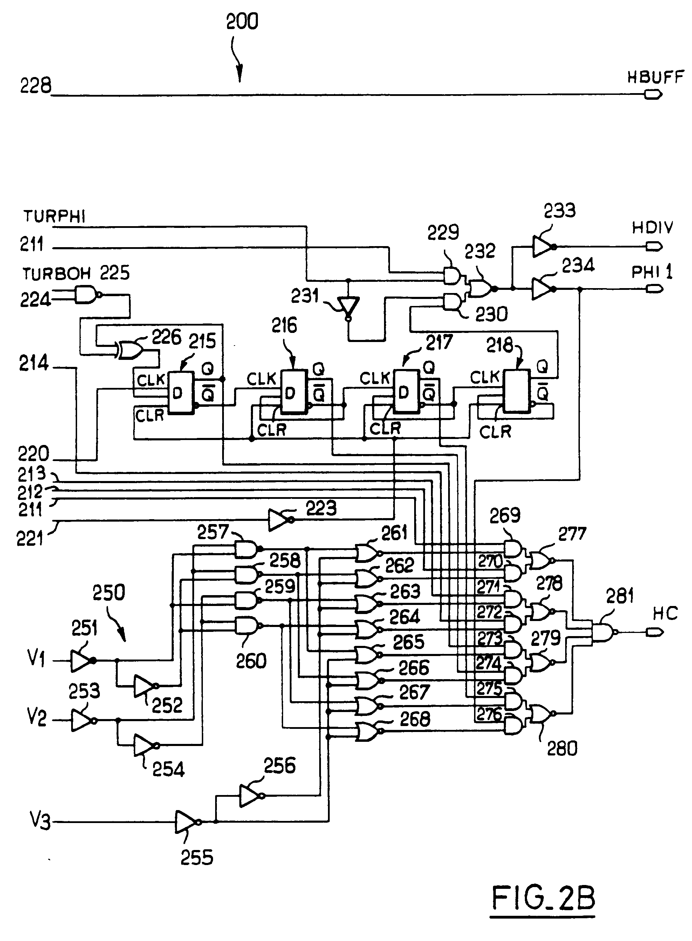

Le schéma du diviseur de fréquence 200 est représenté sur les figures 2A et 2B qui sont complémentaires.

Pour l'essentiel le diviseur de fréquence 200 comprend d'une part un jeu 210 de bascules montées en cascade pour diviser la fréquence du signal de cadencement OSLOW ou OSQUIC issu de l'oscillateur 100, d'autre part un multiplexeur 250 qui génère le signal d'horloge HC à partir des signaux générés par le jeu de bascules 210, en fonction d'un mot de programmation externe sur trois bits appliqués à des entrées V1, V2, V3 du module.

Plus précisément, il est prévu deux ensembles de quatre bascules 211, 212, 213, 214 d'une part, et 215, 216, 217 et 218 d'autre part. Les entrées OSLOW et OSQUIC du module 200 sont reliées aux entrées d'une porte NOR 219. La sortie de la porte 219 attaque par l'intermédiaire d'un inverseur 220 les entrées d'horloge CLK des bascules 211 et 215.

Les entrées de remise à zéro CLR des bascules 211 à 218 reçoivent par l'intermédiaire d'inverseurs 221, 222, 223 un signal de remise à zéro lors de la mise sous tension du système, appliqué de l'extérieur du circuit sur une entrée RAZINIT.

La sortie Q/ de la bascule 211 est rebouclée sur son entrée D et reliée à l'entrée d'horloge CLK de la bascule 212 aval. Il en est de même pour la bascule 212 qui a sa sortie Q/ rebouclée sur son entrée D est reliée à l'entrée d'horloge CLK de la bascule 213 ; cette dernière a elle-même sa sortie Q/ rebouclée sur son entrée D et reliée à l'entrée d'horloge CLK de la bascule 214. Cette bascule 214 a sa sortie Q/ rebouclée sur sa sortie D.

Les sorties Q des bascules 211, 212, 213 et 214 sont reliées aux entrées respectives d'une porte NAND 224. La sortie de celle-ci est reliée à l'entrée d'une porte NAND 225. La deuxième entrée de la porte NAND 225 reçoit un signal de test appliqué de l'extérieur sur une entrée TURBOH.

L'homme de l'art comprendra aisément à l'examen du schéma représenté sur les figures 2A et 2B annexées que la validation de l'entrée TURBOH a pour seul effet d'inhiber une partie du diviseur de fréquence 210, et par conséquent d'élever la fréquence du signal d'horloge à des fins de test. En fonctionnement normal de surveillance du bon fonctionnement du microprocesseur ou microcontrôleur, l'entrée TURBOH est cependant invalidée.

La sortie de la porte NAND 225 est reliée à une première entrée d'une porte ou exclusif 226. La seconde entrée de cette porte est reliée à la sortie Q de la bascule 215. La sortie de la porte ou exclusif 226 attaque l'entrée D de la bascule 215.

La sortie Q/ de la bascule 215 est reliée à l'entrée d'horloge CLK de la bascule 216. La sortie Q/ de la bascule 216 est rebouclée sur son entrée D et est reliée à l'entrée d'horloge CLK de la bascule 217. De même la sortie Q/ de la bacule 217 est rebouclée sur son entrée D et reliée à l'entrée d'horloge CLK de la bascule 218. Enfin la sortie Q/ de la bascule 218 est rebouclée sur son entrée D.

La fréquence de l'oscillateur 110 ou 120 utilisé pour piloter le circuit de surveillance est disponible sur une sortie HBUFF du module 200. En effet, cette sortie est reliée à la sortie de la porte NOR 219 par l'intermédiaire de deux portes non en série 227, 228.

Par ailleurs, le module diviseur 200 délivre sur des sorties HDIV et PHI1 un signal dont la fréquence correspond à celle de l'oscillateur 110 ou 120 utilisé, divisée par 256. Les signaux HDIV et PHI1 sont obtenus sur la base des sorties Q des bascules 211, 218 et d'un signal de test TURPHI. Pour cela l'entrée TURPHI de test du module 200 ainsi que la sortie Q de la bascule 211 sont reliées aux entrées d'une porte ET229. Une seconde porte ET230 reçoit sur ses entrées la sortie Q de la bascule 218, et le signal TURPHI complémenté par une porte NON 231. Les sorties des portes E229, 230 attaquent les entrées d'une porte NOR 232. La sortie de la porte NOR 232 est reliée aux sorties HDIV et PHI1 du module 200 respectivement par des portes NON 233, 234.

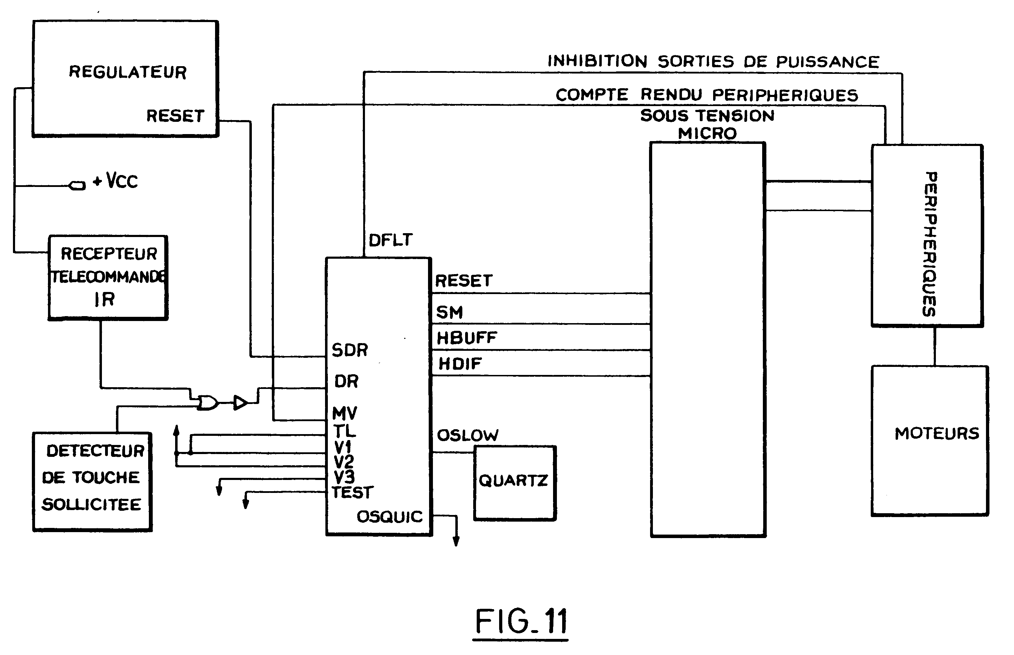

Comme représenté sur la figure 11, la sortie HDIV peut servir à piloter un microcontrôleur. La sortie PHI1 sert quant à elle à piloter le contrôleur d'évènement 400.

Comme indiqué précédemment le mutiplexeur 250 a pour but de générer le signal d'horloge HC sur la base des signaux de fréquence intermédiaire générés par le jeu de bascules 210, et sur la base du mot de programmation défini sur les entrées V1, V2, V3. Selon le mode de réalisation représenté sur la figure 2b, le multiplexeur 250 est formé de portes NON 251, 252, 253, 254, 255, 256, de portes NAND à deux entrées 257, 258, 259, 260, de portes NOR 261, 262, 263, 264, 265, 266, 267 et 268, de portes ET à deux entrées 269, 270, 271, 272, 273, 274, 275, 276, de portes NOR 277, 278, 279, 280 et d'une porte NAND à quatre entrées 281.

Les portes 251 à 268 définissent une combinaison logique des entrées V1, V2 et V3. Les sorties des portes 261 à 268 sont reliées à l'une des entrées des portes ET 269 à 276. La seconde entrée de ces portes 269 à 276 reçoit l'une des sorties Q des bascules 211 à 217 ou la sortie de la porte 234. Le multiplexeur 250 à portes logiques sur la figure 2B peut faire l'objet de diverses variantes de réalisation. Pour cette raison la structure particulière du multiplexeur, c'est-à-dire les connexions exactes définies entre les portes logiques, ne sera pas décrite plus en détail par la suite.

Comme on le comprendra mieux à la lecture de la description qui va suivre, l'état logique imposé sur les entrées V1, V2 et V3, qui correspond au mot de programmation de la division, permet de définir indirectement le seuil de période minimale pour le signal de contrôle issu du microcontrôleur ou du microprocesseur. En effet l'état des entrées V1, V2 et V3 permet de déterminer la fréquence du signal d'horloge HC, et le seuil de période minimale est défini par le compteur 300 comme étant égal à un multiple de la période du signal d'horloge HC.

### COMPTEUR 300

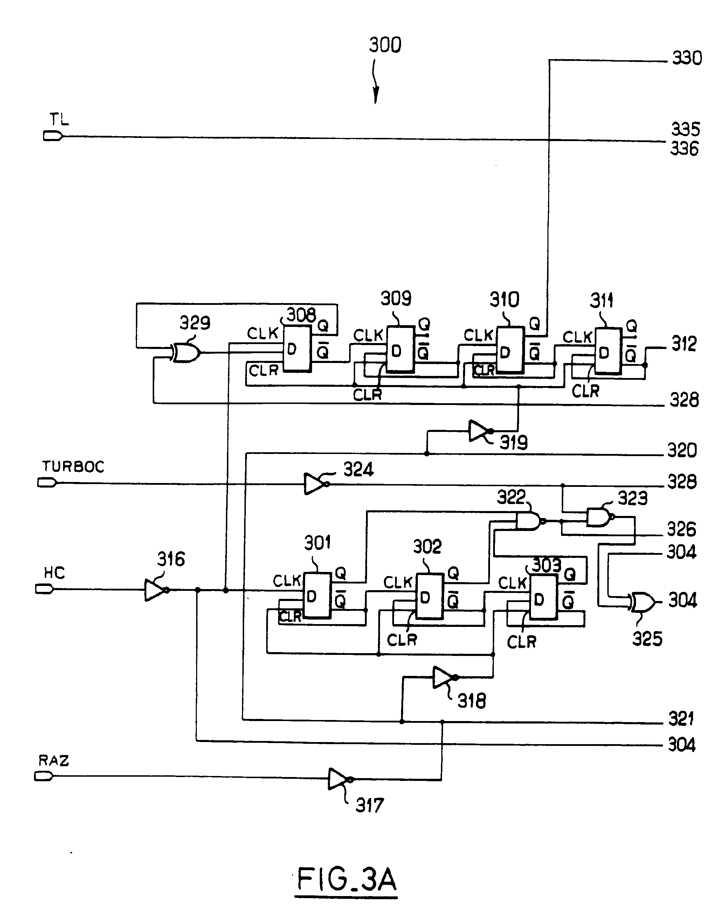

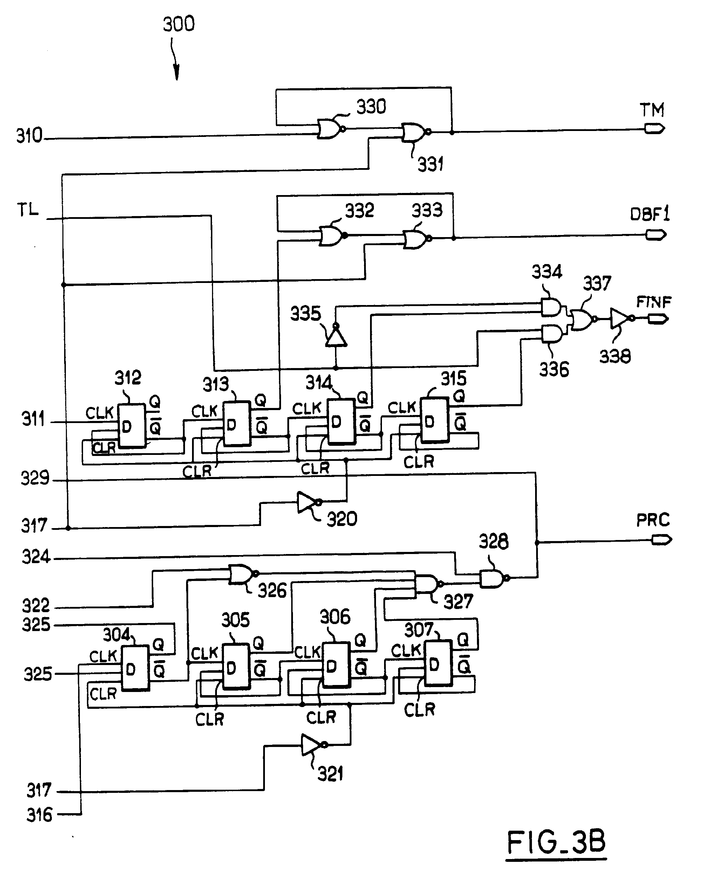

La structure du compteur 300 est représentée sur les figures 3A, 3B, prises en combinaison.

La fonction essentielle du compteur 300 est de générer, à partir du signal d'horloge HC, des fenêtres temporelles.

Plus précisément, la fonction essentielle du compteur 300 est de générer trois drapeaux : un premier drapeau définissant une période dite de temps mort pendant laquelle l'état du signal de contrôle généré par le microcontrôleur au microprocesseur est indifférent, et deux drapeaux correspondant respectivement à la période minimale et à la période maximale entre lesquelles doit se situer la période du signal de contrôle.

Le compteur 300 est formé pour l'essentiel de quinze bascules 301 à 315 montées en cascade, cadencées par le signal d'horloge HC, et associées à des bascules permettant de mémoriser les drapeaux de temps mort et de période minimale générés par les bascules 301 à 315.

Le signal d'horloge HC issu du diviseur de fréquence 200 est appliqué aux entrées d'horloge CLK de la bascule 301, de la bascule 304 et de la bascule 308, par l'intermédiaire d'un inverseur 316.

Les entrées de remise à zéro CLR des bascules 301 à 315 reçoivent un signal de remise à zéro interne RAZ généré par le contrôleur d'évènement 400 selon des modalités qui seront décrites par la suite. Le signal RAZ est appliqué aux bascules 301 à 315 par l'intermédiaire d'inverseurs 317 à 321.

La sortie Q/ de la bascule 301 est rebouclée sur son entrée D et reliée à l'entrée d'horloge CLK de la bascule aval 302. La sortie Q/ de la bascule 302 est rebouclée sur son entrée D et reliée à l'entrée d'horloge CLK de la bascule 303. La sortie Q/ de la bascule 303 est reliée à son entrée D.

Les sorties Q des bascules 301, 302 et 303 sont reliées aux entrées d'une porte NAND 322.

La sortie de la porte 322 est reliée à une première entrée d'une porte NAND 323 dont la deuxième entrée reçoit par l'intermédiaire d'un inverseur 324 un signal de test TURBOC appliqué de l'extérieur. La sortie de la porte 323 est reliée à une première entrée d'une porte ou exclusif 325 dont la deuxième entrée reçoit la sortie Q de la bascule 304. La sortie de la porte ou exclusif 325 est reliée à l'entrée D de la bascule 304. La sortie Q/ de la bascule 304 est reliée à l'entrée d'horloge CLK de la bascule 305. La sortie Q/ de la bascule 305 est rebouclée sur son entrée D et reliée à l'entrée CLK de la bascule 306. La sortie Q/ de la bascule 306 est rebouclée sur son entrée D et reliée à l'entrée d'horloge CLK de la bascule 307. La sortie Q/ de la bascule 307 est rebouclée sur son entrée D.

La sortie de la porte NAND 322 et la sortie Q/ de la bascule 304 attaquent les entrées d'une porte NOR 326. Les entrées d'une porte NAND 327 reçoivent la sortie de cette porte 326 ainsi que les sorties Q/ des bascules 305 à 307.

La sortie de l'inverseur 324 et la sortie de la porte NAND 327 attaquent les entrées d'une porte NAND 328. Celles-ci délivrent à sa sortie un signal de test PRC qui ne sera pas évoqué par la suite dans la mesure où il n'est pas essentiel pour le fonctionnement du circuit de surveillance.

La même sortie de la porte NAND 328 est reliée à l'une des entrées d'une porte ou exclusif 329 qui reçoit sur sa deuxième entrée la sortie Q de la bascule 308.

La sortie de la porte ou exclusif 329 est reliée à l'entrée D de la bascule 308. La sortie Q/ de la bascule 308 est reliée à l'entrée d'horloge CLK de la bascule 309. La sortie Q/ de la bascule 309 est rebouclée sur son entrée D et reliée à l'entrée d'horloge CLK de la bascule 310. La sortie Q/ de la bascule 310 est rebouclée sur son entrée D et reliée à l'entrée d'horloge CLK de la bascule 311. La sortie Q/ de la bascule 311 est rebouclée sur son entrée D et reliée à l'entrée d'horloge CLK de la bascule 312. La sortie Q/ de la bascule 312 est rebouclée sur son entrée D et reliée à l'entrée d'horloge CLK de la bascule 313. La sortie Q/ de la bascule 313 est rebouclée sur son entrée D et reliée à l'entrée d'horloge CLK de la bascule 314. La sortie Q/ de la bascule 314 est rebouclée sur son entrée D et reliée à l'entrée d'horloge CLK de la bascule 315. La sortie Q/ de la bascule 315 est rebouclée sur son entrée D.

Les drapeaux de temps mort, de période mininale et de période maximale sont disponibles respectivement sur des sorties référencées TN, DBF1 et FINF du compteur 300.

Le drapeau de temps mort disponible sur la sortie TM est défini à l'aide de la sortie Q de la bascule 310 mémorisée sur une bascule SR formée par deux portes NOR 330, 331. Pour cela la sortie Q de la bascule 310 est appliquée à une première entrée de la porte 330. La sortie de la porte 330 est reliée à une première entrée de la porte 331. Celle-ci reçoit sur sa seconde entrée le signal de remise à zéro interne RAZ par l'intermédiaire de l'inverseur 317. La sortie de la porte 331 est reliée à la sortie TM du compteur 300. Elle est également rebouclée sur la seconde entrée de la porte 330.

De même, le drapeau correspondant à la période minimale, disponible sur la sortie DBF1, est définie sur la base de la sortie Q de la bascule 313, mémorisée sur une bascule SR formée par deux portes NOR 332, 333. Pour cela, la sortie Q de la bascule 313 est reliée à une première entrée de la porte 332. La sortie de la porte 332 est reliée à une première entrée de la porte 333. Celle-ci reçoit sur sa seconde entrée le signal de remise à zéro interne par l'intermédiaire de l'inverseur 317. La sortie de la porte NOR 303 est reliée à la sortie DBF1 du compteur 300. Elle est par ailleurs reliée à la seconde entrée de la porte 332.

L'homme de l'art comprendra ainsi aisément que la durée du temps mort défini par le drapeau TM correspond à 1/8 de la période minimale définie par le drapeau DBF1.

Le drapeau de période maximale, disponible sur la sortie FINF du compteur 300 est défini au choix sur la base de la sortie Q de la bascule 314, ou sur la base de la sortie Q de la bascule 315.

Le choix entre ces deux possibilités est opéré par contrôle de l'état d'une entrée TL du circuit. La sortie Q de la bascule 314 est reliée à une première entrée d'une porte ET 334, qui reçoit sur sa seconde entrée, par l'intermédiaire d'un inverseur 335, le signal de commande TL. La sortie Q de la bascule 315 est quant à elle reliée à la première entrée d'une porte ET 336 qui reçoit sur sa seconde entrée le signal TL. Les sorties des portes 334, 336 sont reliées aux entrées d'une porte NOR 337, dont la sortie est reliée à la borne FINF par l'intermédiaire d'un inverseur 338.

Ainsi, selon l'état du signal TL imposé de l'extérieur, la période maximale contrôlée, définie par le drapeau FINF, correspond soit à deux fois la période minimale définie par le drapeau DBF1, soit à quatre fois cette période minimale.

On notera que les bascules 301 à 315 sont montées en compteurs asynchrone, une re-synchronisation sur la base du signal d'horloge HC étant prévue en entrée des bascules 301, 304 et 308.

De façon comparable au signal de test TURBOH précité, le signal de test TURBOC permet d'inhiber la partie du compteur formée par les bascules 301 à 307, pour opérer en mode de test à une fréquence plus rapide. Cependant, en mode normal de surveillance du fonctionnement du microcontrôleur ou microprocesseur, le signal de test TURBOC est inhibé.

### CONTROLEUR D'EVENEMENT 400

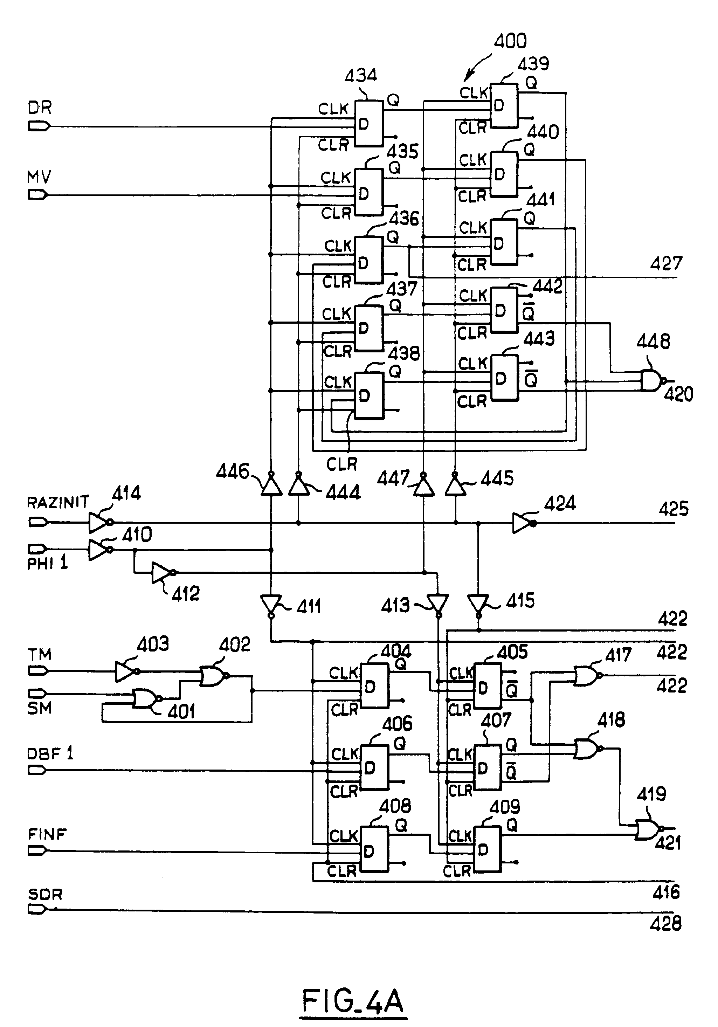

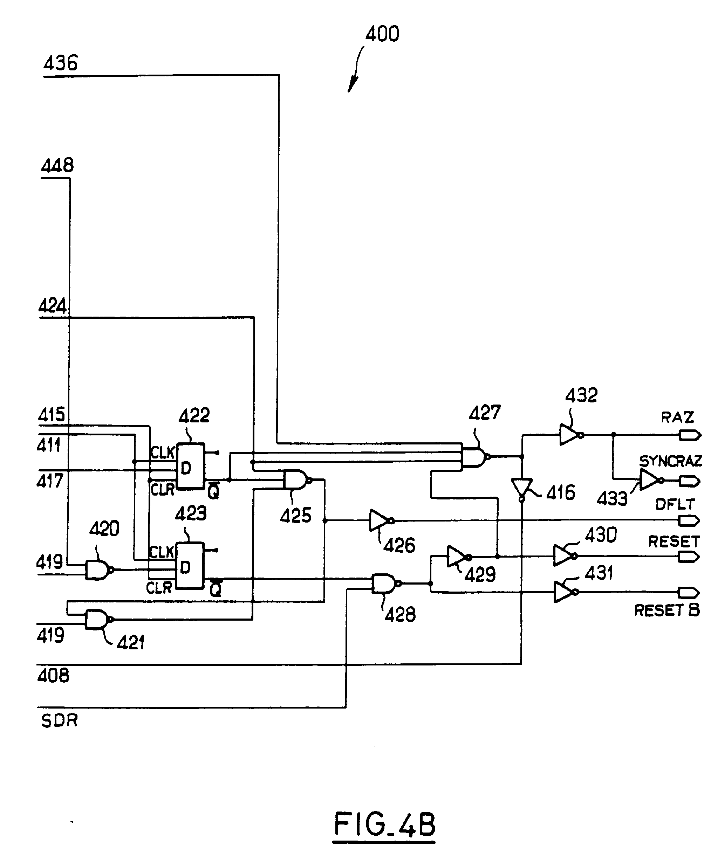

La structure du contrôleur d'évènement 400 est représenté sur les figures 4A et 4B complémentaires.

La fonction principale du contrôleur d'évènement 400 est de contrôler l'état du signal de contrôle généré par le microcontrôleur ou microprocesseur, pendant les fenêtres temporelles définies par le compteur 300.

Le signal de contrôle généré par le microcontrôleur ou microprocesseur est appliqué sur l'entrée SM du contrôleur d'évènement 400.

Plus précisément, le contrôleur d'évènement 400 a pour but de vérifier que le signal de contrôle SM passe bien du niveau bas au niveau haut entre la période minimale définie par le drapeau DBF1 et la période maximale définie par le drapeau FINF. Lorsqu'un tel contrôle positif est opéré, le contrôleur d'évènement assure une remise à zéro du compteur 300, et donc des fenêtres temporelles, par validation du signal RAZ.

En revanche, le contrôleur d'évènement génère un signal de remise à zéro du microcontrôleur ou microprocesseur, sur sa sortie RESET lorsque l'une des conditions suivantes est détectée :
- le signal de contrôle SM n'est pas au niveau logique zéro à la fin du temps mort défini par le drapeau TM,
- le signal SM passe du niveau logique bas au niveau logique haut avant la validation du drapeau DBF1 de période minimale, ou encore
- le signal de contrôle SM ne passe pas du niveau logique bas au niveau logique haut avant la validation du drapeau FINF correspondant à la période maximale admissible.

On retrouve sur la gauche de la figure 4A les signaux RAZINIT, PHI1, TM, SM, DBF1 et FINF précités.

Les autres entrées DR, MV et SDR apparaissant sur la gauche de la figure 4A seront évoquées par la suite.

Comme indiqué précédemment, l'état du signal de contrôle SM généré par le microcontrôleur ou microprocesseur est ignoré tant que le drapeau de temps mort TM n'est pas validé, c'est-à-dire tant que ce drapeau TM est à zéro.

Pour cela, le signal de contrôle SM est appliqué à une première entrée d'une porte NOR 401 dont la sortie est reliée à la première entrée d'une porte NOR 402. La sortie de la porte NOR 402 est rebouclée sur la seconde entrée de la porte 401. Par ailleurs la deuxième entrée de la porte 402 reçoit le signal TM par l'intermédiaire d'un inverseur 403.

Le signal issu de la porte 402, ainsi que les drapeaux DBF1 et FINF font l'objet d'une double mémorisation, dans des bascules 404 à 409, successivement sur le front montant puis sur le front desendant du signal PHI1 issu du diviseur de fréquence 200.

Pour cela, la sortie de la porte 402 est reliée à l'entrée D de la bascule 404. La sortie Q de cette bascule 404 est reliée à l'entrée D de la bascule 405. Le drapeau DBF1 de période minimale est appliqué à l'entrée D de la bascule 406. La sortie Q de cette bascule 406 est reliée à l'entrée D de la bascule 407.

Le drapeau de période maximale définie sur l'entrée FINF est appliqué à l'entrée D de la bascule 408. La sortie Q de celle-ci est appliquée à l'entrée D de la bascule 409. Les entrées d'horloge CLK des bascules d'entrée 404, 406 et 408 reçoivent le signal PHI1 par l'intermédiaire de deux inverseurs 410, 411. Les entrées d'horloge CLK des bascules de sortie 405, 407 et 409 reçoivent le signal PHI1 complémenté par l'intermédiaire de trois inverseurs 410, 412 et 413.

Les entrées de remise à zéro CLR des bascules de sortie 405, 407 et 409 reçoivent le signal de remise à zéro à la mise sous tension RAZINIT, appliqué de l'extérieur, par l'intermédiaire d'inverseurs 414, 415. Les entrées de remise à zéro des bascules d'entrée 404, 406 et 408 reçoivent un signal de remise à zéro interne, correspondant au signal RAZ, défini à la sortie d'un inverseur 416 selon des modalités qui seront définies par la suite.

Le contrôleur d'évènement 400 comprend un module logique formé par trois portes NOR 417, 418, 419 et deux portes NAND 420, 421 qui combinent les sorties des bascules 405, 407 et 409, pour vérifier que le signal de contrôle SM disponible à la sortie de la porte 402 lorsque le drapeau de temps mort TM est au niveau logique haut, passe lui-même du niveau logique bas au niveau logique haut entre la validation des deux drapeaux DBF1 et FINF.

Selon le mode de réalisation représenté sur les figures annexées, la porte NOR 417 reçoit sur ses entrées les sorties Q/ des portes 405 et 407. La porte NOR 418 reçoit sur ses entrées la sortie Q/ de la bascule 405 et la sortie Q de la bascule 407. La porte NOR 419 reçoit sur ses entrées la sortie de la porte 418 et la sortie Q de la bascule 409.

La sortie de la porte NOR 417 est validée lorsque le signal de contrôle SM passe du niveau logique bas au niveau logique haut après validation du drapeau DBF1. Cette information est mémorisée sur une bascule 422 qui reçoit sur son entrée D la sortie de la porte 417. La sortie Q/ de la bascule 422 est utilisée pour générer le signal de remise à zéro interne RAZ, c'est-à-dire remettre à zéro le compteur 300 et les fenêtres temporelles correspondantes.

La sortie de la porte NOR 419 est reliée à une première entrée d'une porte NAND 420 qui reçoit sur sa seconde entrée un signal dérivé du signal de commande MV, selon des modalités qui seront expliqués par la suite. La sortie de la porte 420 est validée en cas de détection de fonctionnement anormal, c'est-à-dire lorsque le signal SM est à zéro à la fin du temps mort défini par le drapeau TM, ou encore lorsque le signal SM passe au niveau logique haut avant la validation du drapeau DBF1, ou encore lorsque le signal de contrôle SM ne passe au niveau logique haut avant la validation du drapeau de période maximale FINF.

L'information disponible sur la sortie de la porte 420 est mémorisée dans une bascule 423 dont l'entrée D est reliée à la sortie de la porte 420.

La sortie Q/ de la bascule 423 est utilisée pour générer le signal RESET de remise à zéro générale du microprocesseur au microcontrôleur. Les entrées d'horloge CLK des bascules 422, 423 reçoivent le signal PHI1 par l'intermédiaire des inverseurs 410, 411. Les entrées de remise à zéro CLR des bascules 422, 423 reçoivent le signal RAZINIT de remise à zéro à la mise sous tension par l'intermédiaire des inverseurs 414 et 415.

Une porte NAND 425 reçoit respectivement sur ses trois entrées la sortie Q/ de la bascule 422, le signal RAZINIT de remise à zéro générale lors de la mise sous tension, par l'intermédiaire d'un inverseur 424, et la sortie d'une porte NAND 421. Celle-ci reçoit sur ses entrées respectivement la sortie de la porte NOR 419 et la sortie de la porte NAND 425.

La sortie de cette porte 425 est reliée à une borne de sortie DFLT du dispositif par l'intermédiaire d'un inverseur 426. La sortie DFLT passe à 1 lorsque la période du signal de contrôle généré par le microcontrôleur au microprocesseur sort de la fenêtre autorisée. En d'autres termes la sortie DFLT passe à 1 en cas de mauvais fonctionnement du microcontrôleur ou microprocesseur.

Une porte NAND à deux entrées 428 reçoit sur ses entrées la sortie Q/ de la bascule 423 et un signal externe SDR. La sortie de la porte 428 est reliée par l'intermédiaire de deux inverseurs 429, 430 à la borne de sortie RESET du dispositif de surveillance, sur laquelle est disponible le signal de remise à zéro du microcontrôleur ou microprocesseur.

Le même signal, complémenté, est disponible sur la borne référencée RESETB, qui est reliée à la sortie de la porte 428 par l'intermédiaire d'un inverseur unique 431.

Une porte NAND 427 à quatre entrées reçoit un signal dérivé du signal de commande MV, la sortie Q/ de la bascule 422 et la sortie de l'inverseur 429 et la sortie de l'inverseur 424. La sortie de la porte 427 est reliée à l'entrée de l'inverseur 416. Elle est également reliée à la sortie RAZ par l'intermédiaire d'un inverseur 402. Ainsi le signal de remise à zéro du compteur 300, en cas de détection de fonctionnement correct, est disponible sur la borne RAZ. Le même signal, complémenté, est disponible sur la sortie référencée SYNCRAZ, qui est reliée à la sortie de l'inverseur 432 par l'intermédiaire d'un inverseur 433.

Les signaux DR et MV sont traités par un jeu de dix bascules 434 à 443.

Le signal DR est appliqué à l'entrée D de la bascule 434. la sortie Q de cette bascule est reliée à l'entrée D à la bascule 439. La sortie Q de la bascule 439 est reliée à l'entrée D de la bascule 438. La sortie Q de la bascule 438 est reliée à l'entrée D de la bascule 443.

Le signal MV est appliqué à l'entrée D de la bascule 435. La sortie Q de la bascule 435 est reliée à l'entrée D de la bascule 440. La sortie Q de la bascule 440 est reliée à l'entrée D de la bascule 436. La sortie Q de la bascule436 est reliée à l'entrée D de la bascule 441. La sortie Q de la bascule 441 est reliée à l'entrée D de la bascule 437. La sortie Q de la bascule 437 est reliée à l'entrée D de la bascule 442.

Les entrées de remise à zéro CLR des bascules 434 à 443 reçoivent le signal RAZINIT par l'intermédiaire d'inverseurs 444, 445. Les entrées d'horloge CLK des bascules 434 à 438 reçoivent le signal PHI1 par l'intermédiaire d'inverseurs 410, 446. Les bascules 439 à 443 reçoivent le signal PHI1 complémenté par l'intermédiaire de trois inverseurs 410, 412 et 447. La sortie Q de la bascule 439 et la sortie Q/ des bascules 442 et 443 sont réunies dans une porte NAND 448. La sortie de celle-ci attaque l'entrée de la porte NAND 420. Par ailleurs la sortie Q de la bascule 436 attaque l'une des entrées de la porte NAND 427.

### FONCTIONNEMENT DU DISPOSITIF

On rappelle que comme cela apparaît sur la figure 1 le dispositif comprend :
- deux entrées OSLOW et OSQUIC réservées à des oscillateurs 110, 120,
- trois entrées V1, V2, V3 permettant, par programmation du diviseur 200, de sélectionner la borne minimale autorisée pour la période du signal de contrôle généré par le microcontrôleur,
- une entrée TL définissant par programmation du compteur 300, la borne maximale TMAX pour la période du signal de contrôle généré par un microcontrôleur (soit TMAX = 2TMIN ou TMAX = 4TMIN),
- des entrées TURBOH, TURPHI et TURBOC, de test, qui peuvent être réunies dans un bloc de configuration commande par une seule entrée de test ; en fonctionnement normal cette entrée de test doit être mise à la masse,
- une entrée RAZINIT générant une mise à zéro du système lors de la mise sous tension,
- une entrée SM qui reçoit le signal de contrôle généré par le microcontrôleur au microprocesseur, et
- l'entrée SDR qui permet de déclencher un RESET prioritaire,
- l'entrée MV qui permet d'activer ou désactiver la surveillance du signal de contrôle généré par le microcontrôleur, et l'entrée DR qui permet quand l'entrée MV se trouve à zéro de déclencher une impulsion de RESET quand DR passe de l'état bas à l'état haut.

Le dispositif de surveillance comprend également :
- la sortie HBUFF qui donne un signal carré de fréquence égale à celle du quartz utilisé en entrée, cette sortie peut être utilisée pour attaquer l'entrée de la cellule oscillateur du microcontrôleur,
- une sortie HDIV qui délivre un signal de fréquence égale à celle du quartz utilisé divisée par 256,
- une sortie de test PRC,
- une sortie DBF indiquant le début de la fenêtre autorisée pour la période du signal de contrôle, par passage à l'état haut de cette sortie,
- une sortie RESET où sont délivrées des impulsions de RESET actives à l'état haut,
- une sortie RESETB où sont délivrées des impulsions de RESET actives à l'état bas,
- une sortie DFLT qui passe à 1 si la période du signal de contrôle générée par le microcontrôleur sort de la fenêtre autorisée et une sortie SYNCRAZ indiquant que le circuit effectue une remise à zéro de ces compteurs.

L'entrée MV permet de valider ou d'invalider la surveillance du signal de contrôle généré par des microcontrôleurs. Si l'entrée MV est fixée à zéro, seules les entrées SDR et DR permettent de générer des RESET.

Lorsque l'entrée MV est à zéro, SDR est l'entrée déclenchant un RESET prioritaire. Cette entrée peut être utilisée pour générer une impulsion de RESET à la mise sous tension. SDR est un signal actif à l'état bas. L'impulsion de RESET à la mise sous tension peut par conséquent être générée à l'aide d'un montage comprenant une résistance et une capacité en série entre la masse et une borne d'alimentation positive, le signal SDR étant pris au point milieu de cette branche série. Lorsque MV est à zéro l'entrée DR permet de déclencher des impulsions de RESET sur chaque passage DR de l'état bas vers l'état haut.

Toutefois la génération de l'impulsion de RESET n'est garantie que si la largeur de l'impulsion présente sur DR est supérieure à la largeur de l'impulsion de RESET.

Lorsque l'entrée MV est à un, la sortie RESET du circuit est active tant que l'entrée SDR est à zéro. La remontée de SDR déclenche la séquence de surveillance des impulsions du microcontrôleur.

A la montée du signal MV, l'entrée DR reste active pendant un temps égal à la largeur d'une impulsion de RESET. Ensuite les états de l'entrée DR sont ignorés.

Par conséquent, quand MV est à un la surveillance des impulsions est activée. La séquence de surveillance est initialisée au front montant de MV. Toutefois, si l'entrée DR déclenche un RESET la séquence de surveillance est ré-initialisée au front descendant du RESET.

La séquence de surveillance du signal de contrôle généré par un microcontrôleur commence par une ré-initialisation du compteur 300 et des fenêtres temporelles correspondantes. Ensuite, les compteurs sont libérés, et les fenêtres temporelles représentées par les drapeaux TM, DBF1 (TMIN) et FINF (TMAX) sont générées.

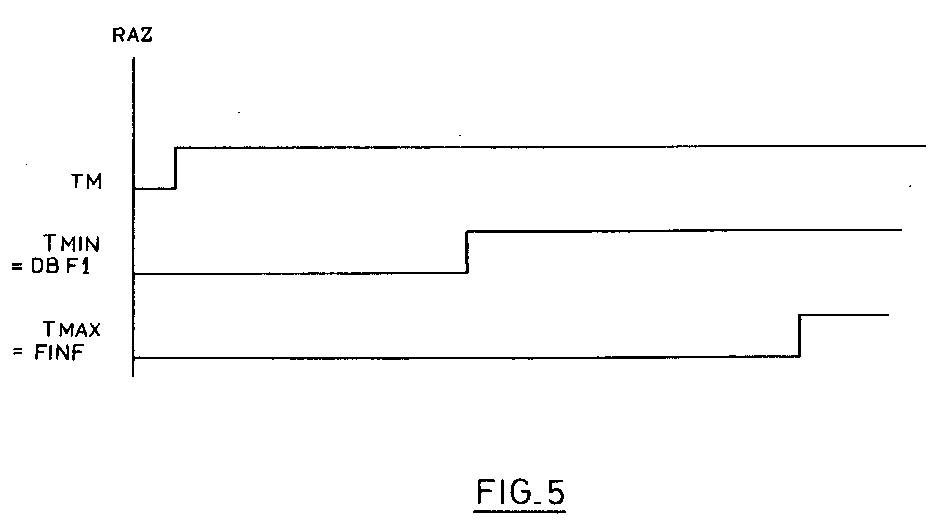

On a représenté schématiquement sur la figure 5 un chronogramme des drapeaux TM, TBF1 et FNIF.

On notera que selon la représentation de la figure 5, la fenêtre définie par le drapeau DBF1 égale huit fois la fenêtre définie par le drapeau TM, tandis que le drapeau défini par FINF égale deux fois le drapeau défini par DBF1.

Le microcontrôleur dispose d'un temps TMIN/8 appelé temps mort, pendant lequel les états qu'il envoie sur l'entrée SM sont ignorés. Si à la fin de cette temporisation l'entrée SM n'est pas à zéro, un signal RESET est généré. Une ré-initialisation du processus est alors relancé au front descendant du RESET.

Le microcontrôleur doit maintenir l'entrée SM à zéro entre la validation du drapeau TM et la validation du drapeau DBF1. Si l'entrée SM passe cependant à un pendant cette fenêtre temporelle, une impulsion RESET est générée et la ré-initialisation du processus est lancée.

Le microcontrôleur doit déposer une impulsion entre la validation du drapeau DBF1 et la validation du drapeau FINF. Si tel est le cas le processus de génération des fenêtres temporelles par le compteur 300 est ré-initialisé par validation du signal RAZ au moment où apparaît l'impulsion sur SM. Le fonction étant considéré comme correct il n'y a pas génération d'impulsion de RESET.

En revanche, si lors de la validation du drapeau FINF, qui correspond à la période maximale admissible, une impulsion n'est toujours pas apparue sur le signal de contrôle SM, une impulsion de RESET est générée et le processus est ré-initialisé.

L'ouverture de la fenêtre de période autorisée est signalée en sortie du dispositif de surveillance par le passage à un de la sortie DBF. Quand une re-initialisation est effectuée cette sortie repasse à zéro.

Un RESET déclenché par un signal de contrôle hors gabarit sur l'entrée SM a pour effet de faire passer la sortie DFLT à un. Cette sortie ne redescent à zéro que si le microcontrôleur reprend une génération correcte d'impulsion. A la mise sous tension le signal DFLT est initialisé à zéro.

Les fenêtres définies par les drapeaux TM, DBF1 et FINF sont des fonctions de la fréquence du quartz utilisé en entrée et des entrées V1, V2, V3 et TL. La fenêtre de temps mort défini par le drapeau TM a une durée égale à TMIN/8, TMIN étant la borne inférieure de la période autorisée, définie par le drapeau DBF1.

La borne supérieure de la période autorisée est égale à 2TMIN si l'entrée TL est égale à zéro et 4TMIN si l'entrée TL est à un.

La largeur de l'impulsion de RESET est égale à la période définie par le quartz divisé par 256.

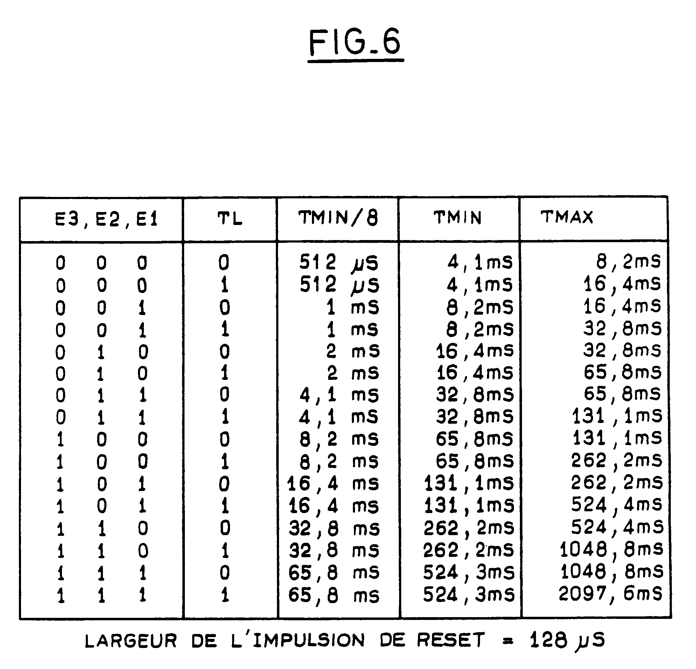

On a donné dans le tableau représenté sur la figure 6 annexée, les valeurs de fenêtres disponibles pour un quartz de 2MHz.

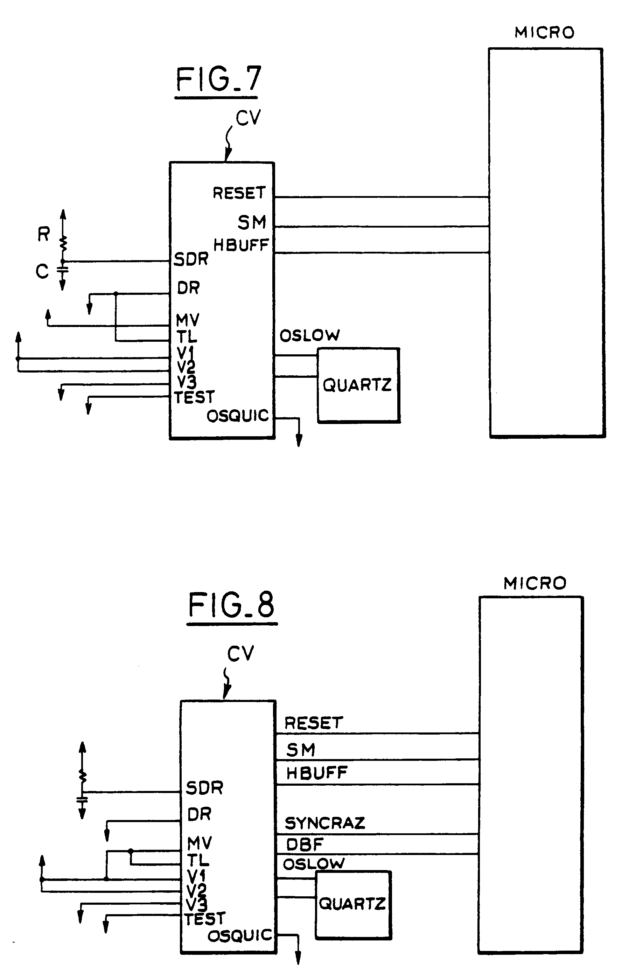

### APPLICATIONS DU CIRCUIT DE SURVEILLANCE REPRESENTEES SUR LES FIGURES 7 A 13

Sur les figures 7 à 13 les entrées TURBOH, TURPHI, RAZINIT et TURBOC sont réunies sous forme d'une entrée de test unique.

L'application représentée sur la figure 7 annexée correspond à la surveillance du fonctionnement d'un microcontrôleur en mode asynchrone.

On retrouve sur la figure 7 un circuit de surveillance référencé CV conforme aux dispositions décrites précédemment en regard des figures 1 à 5, ainsi qu'un microcontrôleur.

Les entrées DR, TL, V3 et TEST du dispositif CV sont placées au niveau logique bas tandis que les entrées MV, V1 et V2 du dispositif CV sont placées au niveau logique haut. L'entrée SDR est reliée au point milieu d'un pont comprenant une résistance R et une capacité C en série entre la masse et la borne d'alimentation positive, la capacité étant placée côté masse. Un quartz est relié à l'entrée OSLOW du circuit tandis que l'entrée OSQUIC est mise à la masse.

Le circuit CV reçoit sur son entrée SM le signal de contrôle généré par le microcontrôleur. Ce dernier est piloté par le signal de cadencement généré par le quartz, la sortie HBUFF du dispositif CV étant reliée au microcontrôleur. Enfin, si nécessaire, celui-ci est ré-initialisé grâce aux signaux de RESET générés par le circuit CV.

L'application représentée sur la figure 8 correspond à la surveillance du fonctionnement d'un microcontrôleur en mode synchrone, avec contrôle du fonctionnement du dispositif de surveillance par le microcontrôleur.

L'application représentée sur la figure 8 se distingue de celle représentée sur la figure 7 uniquement par le fait que l'entrée TL est placée au niveau logique haut et non pas au niveau logique bas d'une part, et d'autre part et surtout que les sorties DBF1 et SYNCRAZ du dispositif de surveillance CV sont reliées au microcontrôleur pour indiquer à celui-ci, par la sortie DBF, la validation du drapeau de la période minimale, donc l'instant à partir duquel le microcontrôleur est autorisé à placer une impulsion du signal de contrôle, et indiquer par la sortie SYNCRAZ que le dispositif de surveillance CV effectue une remise à zéro de son compteur 300 et donc des fenêtres temporelles correspondantes.

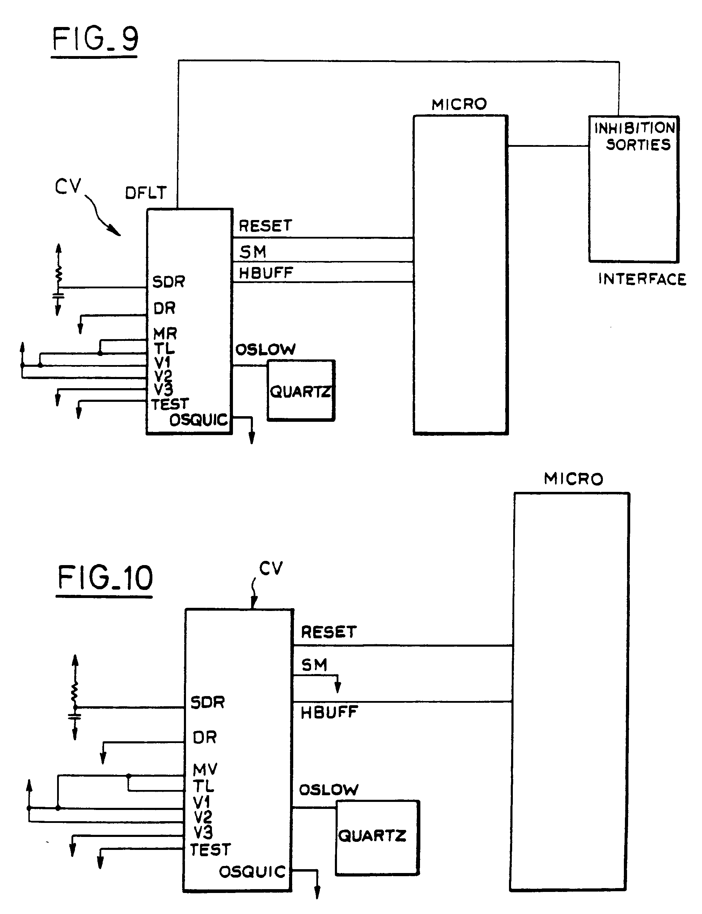

L'application représentée sur la figure 9 correspond à la surveillance du fonctionnement d'un microcontrôleur avec inhibition des interfaces de sortie de celui-ci, à partir d'un défaut détecté dans le fonctionnement du microcontrôleur, jusqu'au retour à un fonctionnement normal de celui-ci.

On aperçoit sur la figure 9 un dispositif de surveillance CV, un microcontrôleur et une interface de sortie reliée au microcontrôleur. L'application représentée sur la figure 9 se distingue de celle représentée sur la figure 7 par le fait que d'une part l'entrée TL est au niveau logique haut et non pas au niveau logique bas et que d'autre part et surtout la sortie DFLT du dispositif de surveillance CV est relié à l'entrée d'inhibition de l'interface. Ainsi, la sortie DFLT du circuit CV étant à un tant que la période du signal de contrôle sort de la fenêtre autorisée, l'interface de sortie est inhibée tant que le fonctionnement du microcontrôleur est anormal.

L'application représentée sur la figure 10 correspond à un mode de remise à zéro périodique du microcontrôleur.

Pour cela, l'entrée SM du dispositif de surveillance CV ne reçoit pas le signal de contrôle du microcontrôleur, mais est placée au niveau logique bas. Il en résulte que le compteur 300 vient périodiquement en butée à la période maximale autorisée et valide le drapeau FINF correspondant. Des impulsions RESET sont ainsi générées périodiquement. Pour le reste les entrées et sorties du dispositif de surveillance CV restent conformes aux dispositions décrites précédemment en regard de la figure 7, mise à part que l'entrée TL est là encore au niveau logique haut.

L'application représentée sur la figure 11 correspond à la surveillance du fonctionnement d'un microcontrôleur avec possibilité de réveil d'un microcontrôleur endormi par une intervention externe, par exemple sollicitation d'une touche ou activation d'un récepteur de télécommande infra-rouge.

On a représenté sur la figure 11 annexée un dispositif de surveillance CV recevant un quartz sur son entrée OSLOW, un microcontrôleur, des périphériques associés à des moteurs, un détecteur de touche sollicité, un récepteur de télécommnade infra-rouge et un régulateur.

Le régulateur attaque l'entrée SDR du dispositif CV. L'entrée DR reçoit une combinaison logique de la sortie des éléments externes susceptibles de réveiller le microcontrôleur, par exemple un récepteur de télécommande infra-rouge ou un détecteur de touche sollicité comme indiqué précédemment, de sorte qu'une impulsion de réveil soit appliquée sur l'entrée DR du circuit CV lors de l'activation de l'un de ces éléments.

L'entrée MV du dispositif de surveillance CV est reliée à une sortie des périphériques permettant d'indiquer au circuit CV si les périphériques sont ou non sous tension. Les entrées TL, V1 et V2 sont au niveau haut. Les entrées V3 et TEST sont au niveau bas.

Le circuit CV reçoit sur son entrée SM le signal de contrôle généré par le microcontrôleur. Les sorties RESET, HBUFF et HDIV du circuit CV sont reliées aux entrées associées du microcontrôleur. Enfin, la sortie DFLT du dispositif de surveillance CV est reliée à l'entrée d'inhibition des périphériques de sortie du microcontrôleur.

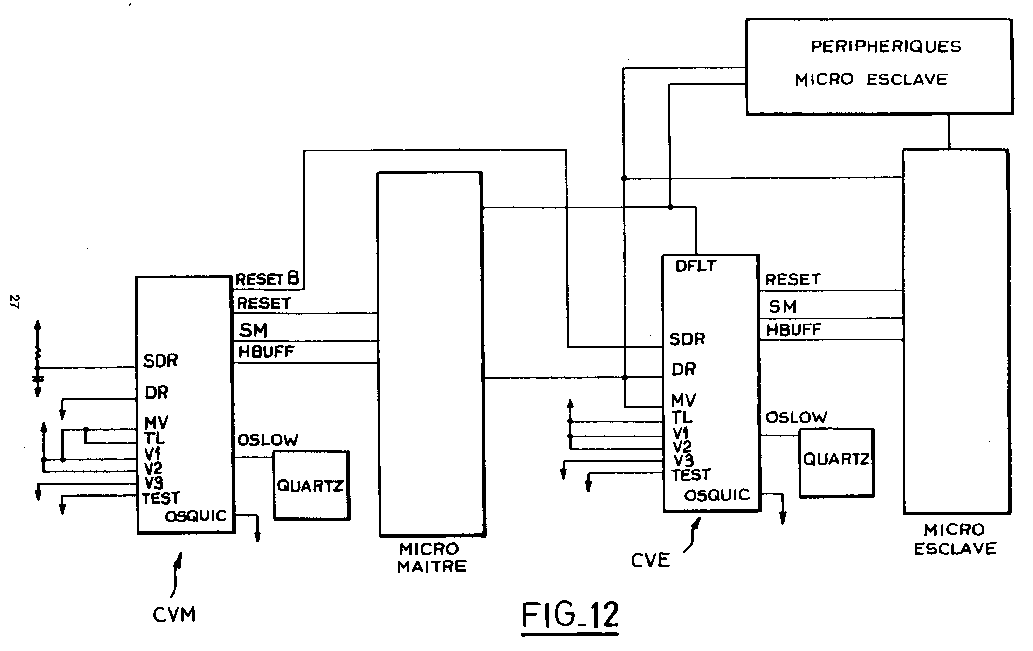

L'application représentée sur la figure 12 correspond à une application utilisant un microcontrôleur maître et un microcontrôleur esclave avec possibilité pour le microcontrôleur maître d'endormir et de réveiller les fonctions du microcontrôleur esclave.

On a représenté schématiquement sur la figure 12 un microcontrôleur maître associé à un premier dispositif de surveillance CVM, et un microcontrôleur esclave associé à un second dispositif de surveillance CVE. On a également représenté sur la figure 12 schématiquement des périphériques du microcontrôleur esclave.

Les entrées SDR, DR, NY, TL, V1, V2, V3, TEST, OSLOW et OSQUIC du dispositif CVM sont connectées comme indiqué précédemment en regard de la figure 8. Le circuit CVM reçoit sur son entrée SM le signal de contrôle du microcontrôleur maître. Ces sorties RESET et HBUFF sont reliées aux entrées associées du microcontrôleur maître. Sa sortie RESETB est reliée à l'entrée SDR du circuit CVE.

Les entrées DR et MV du circuit CVE sont reliées à une borne associée du microcontrôleur maître et à une borne d'autorisation des périphériques du microcontrôleur esclave.

Les entrées TL, V1 et V2 du circuit CVE sont au niveau logique haut, les entrées V3, TEST et OSQUIC sont au niveau bas un quartz attaque l'entrée OSLOW. Le circuit CVE reçoit sur son entrée SM le signal de contrôle généré par le microcontrôleur esclave. Ces sorties RESET, HBUFF sont reliées aux entrées associées du microcontrôleur esclave. Enfin, la sortie DFLT du circuit CVE attaque une borne associée du microcontrôleur maître ainsi que l'entrée inhibition des périphériques.

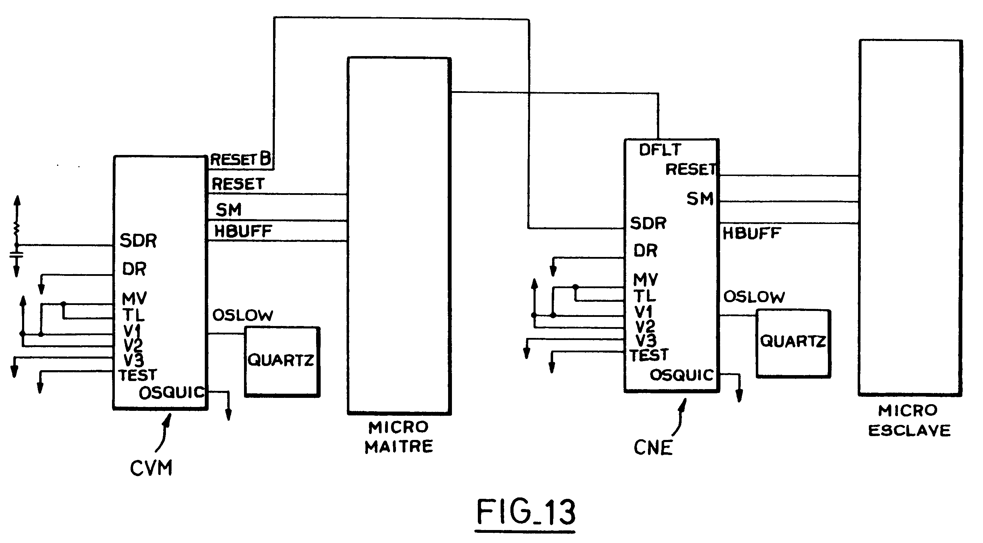

L'application représentée sur la figure 13 correspond à une application simple en multicontrôleur. On retrouve sur la figure 13 un microcontrôleur maître associé à un premier circuit de surveillance CVM, ainsi qu'un microcontrôleur esclave associé à un second circuit de surveillance CVE.

Les connexions existant entre le premier circuit de surveillance CVM et le microcontrôleur maître, entre le premier circuit de surveillance CVM et le second circuit de surveillance CVE, ainsi qu'entre le second circuit de surveillance CVE et le microcontrôleur esclave restent identiques à celles décrites précédemment en regard de la figure 12. La figure 13 se distingue essentiellement de la figure 12 par l'absence de périphériques associées au microcontrôleur esclave. Il en résulte que la sortie DFLT du second dispositif de surveillance CVE est reliée uniquement au microcontrôleur maître et que l'entrée DR du dispositif CVE est au niveau logique bas tandis que l'entrée NV du même circuit CVE est au niveau logique haut.

## Revendications

1. Dispositif de surveillance du fonctionnement d'un microcontrôleur ou microprocesseur qui génère un signal de contrôle SM, comprenant :
- un oscillateur (100) qui délivre un signal de cadencement de fréquence constante et connue,
- un diviseur de fréquence programmable (200) qui reçoit en entrée le signal de cadencement et délivre à sa sortie un signal d'horloge HC, et
- un compteur (300) recevant le signal d'horloge HC, caractérisé par le fait que
- le compteur (300) recevant le signal d'horloge HC définit trois drapeaux TM, DBF1, FINF pour chaque impulsion du signal de contrôle correspondant respectivement à un nombre prédéterminé d'impulsions d'horloge HC reçues ;
le drapeau TM représentant un temps mort pendant lequel le signal de contrôle SM peut prendre un état quelconque ;
le drapeau DBF1 représentant la période minimale autorisée ;
le drapeau FINF représentant la période maximale autorisée ;
- et par le fait qu'il comprend en outre un contrôleur d'évènement (400) recevant les drapeaux TM, DBF1, FINF et le signal de contrôle SM, qui contrôle que le signal de contrôle SM
- est au niveau inactivé lors de la validation du drapeau TM pour générer un signal RESET dans le cas contraire ;
- ne passe pas au niveau activé avant la validation du drapeau DBF1 pour générer un signal RESET dans le cas contraire ;
- passe au niveau activé entre la validation des drapeaux DBF1 et FINF pour opérer une remise à zéro du compteur (300) lors d'une telle détection et pour générer un signal RESET si la validation du drapeau FINF intervient avant le passage du signal de contrôle SM au niveau activé.

2. Dispositif de surveillance selon la revendication 1, caractérisé par le fait que le diviseur de fréquence (200) comprend un jeu de bascules (211 à 218) montées en cascade pour diviser le signal de cadencement OSLOW généré par l'oscillateur (100), et un ensemble de portes logiques formant multiplexeur (250) qui réalise une combinaison logique des sorties des bascules (211 à 218) et d'un mot de programmation V1, V2, V3 pour générer le signal d'horloge HC.

3. Dispositif de surveillance selon la revendication 2, caractérisé par le fait que le mot de programmation V1, V2, V3 a trois bits.

4. Dispositif de surveillance selon l'une des revendications 1 à 3, caractérisé par le fait que le diviseur de fréquence (200) délivre en outre un signal d'horloge auxiliaire PHI1 dont la fréquence correspond à celle du signal de cadencement divisée par une valeur fixe.

5. Dispositif de surveillance selon l'une des revendications 1 à 4, caractérisé par le fait que le compteur (300) comprend un jeu de bascules (301 à 315) montées en cascade pour diviser la fréquence du signal d'horloge HC, et des ensembles (330, 331 ; 332, 333) aptes à mémoriser le basculement de certaines choisies des bascules (310, 313).

6. Dispositif de surveillance selon la revendication 5, caractérisé par le fait que les ensembles de mémorisation comprennent deux portes logiques (330, 331 ; 332, 333).

7. Dispositif de surveillance selon l'une des revendications 1 à 6, caractérisé par le fait que la durée séparant la validation du drapeau DBF1 représentatif de la période minimale autorisée, d'une remise à zéro est égale à un multiple de la durée séparant la validation du drapeau TM représentant un temps mort, de la même remise à zéro.

8. Dispositif de surveillance selon la revendication 7, caractérisé par le fait que la durée séparant la validation du drapeau DBF1 d'une remise à zéro est égale à huit fois la durée séparant la validation du drapeau TM de la même remise à zéro.

9. Dispositif de surveillance selon l'une des revendications 1 à 8, caractérisé par le fait que la durée séparant la validation du drapeau FINF représentatif de la période maximale autorisée, d'une remise à zéro est égale à un multiple de la durée séparant la validation du drapeau DBF1 représentatif de la période minimale autorisée, de la même remise à zéro.

10. Dispositif de surveillance selon la revendication 9, caractérisé par le fait que la durée séparant la validation du drapeau FINF d'une remise à zéro est égale, au choix, à deux ou quatre fois la durée séparant la validation du drapeau DBF1 de la même remise à zéro.

11. Dispositif de surveillance selon la revendication 10, caractérisé par le fait que le choix de la durée de la période maximale autorisée est opéré par contrôle de l'état logique d'une entrée TL du circuit.

12. Dispositif de surveillance selon l'une des revendications 1 à 11, caractérisé par le fait que le contrôleur d'évènement (400) comprend des portes qui forment une combinaison logique du signal de contrôle SM et des drapeaux TM, DBF1, FINF.

13. Dispositif de surveillance selon l'une des revendications 1 à 12, caractérisé par le fait que le contrôleur d'évènement (400) comprend une entrée SDR générant un RESET prioritaire.

14. Dispositif de surveillance selon l'une des revendications 1 à 13, caractérisé par le fait que le contrôleur d'évènement (400) comprend une entrée MV apte à inhiber la surveillance du signal de contrôle SM.

15. Dispositif de surveillance selon la revendication 14, caractérisé par le fait que le contrôleur d'évènement (400) comprend une entrée DR apte à générer un signal de RESET lorsque l'entrée MV inhibe la surveillance du signal de contrôle SM.

## Patentansprüche

1. Vorrichtung zur Funktionsüberwachung eines Mikrosteuerbausteins oder Mikroprozessors, der ein Steuersignal SM erzeugt, mit:
einem Oszillator (100), welcher ein Taktungssignal konstanter und bekannter Frequenz liefert,
einem programmierbaren Frequenzteiler (200), welcher am Eingang das Taktungssignal erhält und an seinem Ausgang ein Taktsignal HC liefert, und
einem Zähler (300), der das Taktsignal HC erhält, dadurch gekennzeichnet, daß
der das Taktsignal HC erhaltende Zähler (300) drei Merker CM, DBF1, FINF für jeden Impuls des Steuersignals definiert, die jeweils einer bestimmten Anzahl von erhaltenen Taktimpulsen HC entsprechen,
wobei der Merker TM eine Totzeit repräsentiert, während welcher das Steuersignal SM irgendeinen Zustand annehmen kann,
der Merker DBF1 den minimalen zugelassenen Zeitabschnitt repräsentiert,
der Merker FINF den maximalen zugelassenen Zeitabschnitt repräsentiert,
und dadurch daß, sie ferner einen Ereigniskontrolleur (400) aufweist, welcher die Merker TM, DBF1, FINF und das Steuersignal SM erhält und überwacht, daß das Steuersignal SM
auf inaktivem Pegel während der Validierung des Merkers TM ist, um im gegenteiligen Fall ein RESET-Signal zu erzeugen,
vor Validierung des Merkers DBF1 nicht auf aktiven Pegel übergeht, um im gegenteiligen Fall ein RESET-Signal zu erzeugen,
zwischen der Validierung der Merker DBF1 und FINF auf aktiven Pegel übergeht, um eine Rücksetzung des Zählers (300) auf Null bei einer solchen Feststellung durchzuführen und um ein RESET-Signal zu erzeugen, wenn die Validierung des Merkers FINF vor dem Übergang des Steuersignals SM auf aktiven Pegel eintritt.

2. Überwachungsvorrichtung nach Anspruch 1, dadurch gekennzeichnet, daß der Frequenzteiler (200) eine Gruppe von in Kaskade geschalteten Kippgliedern (211 bis 218) zur Teilung des vom Oszillator (100) erzeugten Taktungssignals OSLOW und einen Aufbau von Logikgliedern aufweist, die einen Multiplexer (250) bilden, der eine logische Kombination der Ausgänge der Kippglieder (211 bis 218) und eines Programmierungsworts V1, V2, V3 zur Erzeugung des Taktsignals HC verwirklicht.

3. Überwachungsvorrichtung nach Anspruch 2, dadurch gekennzeichnet, daß das Programmierungswort V1, V2, V3 drei Bits hat.

4. Überwachungsvorrichtung nach einem der Ansprüche 1 bis 3, dadurch gekennzeichnet, daß der Frequenzteiler (200) ferner ein Hilfstaktsignal PHI1 liefert, dessen Frequenz derjenigen des Taktungssignals geteilt durch einen festen Wert entspricht.

5. Überwachungsvorrichtung nach einem der Ansprüche 1 bis 4, dadurch gekennzeichnet, daß der Zähler (300) eine Gruppe von in Kaskade geschalteten Kippgliedern (301 bis 315) zur Teilung der Frequenz des Taktsignals HC und zur Speicherung des Kippens gewisser ausgewählter der Kippglieder (310, 313) geeignete Aufbauten (330, 331; 332, 333) aufweist.

6. Überwachungsvorrichtung nach Anspruch 5, dadurch gekennzeichnet, daß die Speicheraufbauten zwei Logikglieder (330, 331; 332, 333) aufweisen.

7. Überwachungsvorrichtung nach einem der Ansprüche 1 bis 6, dadurch gekennzeichnet, daß die Zeitdauer, welche die Validierung des den minimalen zugelassenen Zeitabschnitt repräsentierenden Merkers DBF1 von einer Rücksetzung auf Null trennt, ein Vielfaches der Zeitdauer ist, welche die Validierung des eine Totzeit repräsentierenden Merkers TM von der gleichen Rücksetzung auf Null trennt.

8. Überwachungsvorrichtung nach Anspruch 7, dadurch gekennzeichnet, daß die Zeitdauer, welche die Validierung des Merkers DBF1 von einer Rücksetzung auf Null trennt, gleich dem Achtfachen der Zeitdauer ist, welche die Validierung des Merkers TM von der gleichen Rücksetzung auf Null trennt.

9. Überwachungsvorrichtung nach einem der Ansprüche 1 bis 8, dadurch gekennzeichnet, daß die Zeitdauer, welche die Validierung des den maximalen zugelassenen Zeitabschnitt repräsentierenden Merkers FINF von einer Rücksetzung auf Null trennt, gleich einem Vielfachen der Zeitdauer ist, welche die Validierung des den minimalen zugelassenen Zeitabschnitt repräsentierenden Merkers DBF1 von der gleichen Rücksetzung auf Null trennt.

10. Überwachungsvorrichtung nach Anspruch 9, dadurch gekennzeichnet, daß die Zeitdauer, welche die Validierung des Merkers FINF von einer Rücksetzung auf Null trennt gleich, wahlweise, dem Zwei- oder Vierfachen der Zeitdauer ist, welche die Validierung des Merkers DBF1 von der gleichen Rücksetzung auf Null trennt.

11. Überwachungsvorrichtung nach Anspruch 10, dadurch gekennzeichnet, daß die Wahl der Zeitdauer des maximalen zugelassenen Zeitabschnitts durch Steuerung des logischen Zustands eines Eingangs TL der Schaltung durchgeführt wird.

12. Überwachungsvorrichtung nach einem der Ansprüche 1 bis 11, dadurch gekennzeichnet, daß der Ereigniskontrolleur (400) Anschlüsse aufweist, welche eine logische Kombination des Steuersignals SM und der Merker TM, DBF1, FINF bilden.

13. Überwachungsvorrichtung nach einem der Ansprüche 1 bis 12, dadurch gekennzeichnet, daß der Ereigniskontrolleur (400) einen Eingang SDR aufweist, der einen Prioritäts-RESET erzeugt.

14. Überwachungsvorrichtung nach einem der Ansprüche 1 bis 13, dadurch gekennzeichnet, daß der Ereigniskontrolleur (400) einen Eingang MV aufweist, der zur Inhibierung der Überwachung des Steuersignals SM geeignet ist.

15. Überwachungsvorrichtung nach Anspruch 14, dadurch gekennzeichnet, daß der Ereigniskontrolleur (400) einen Eingang DR aufweist, der für eine Erzeugung eines RESET-Signals, wenn der Eingang MV die Überwachung des Steuersignals SM inhibiert, geeignet ist.

## Claims

1. A monitoring circuit for monitoring the operation of a microcontroller or a microprocessor that generates a monitor signal SM, comprising :
· an oscillator (100) delivering a driving signal at a constant, known frequency
· a programmable frequency divider (200) having an input receiving the driving signal and having an output delivering a clok signal HC ; and
· a counter (300) receiving the clock signal HC ;
characterized by the fact that :
· the counter (300) receiving the clock signal HC defines three flags TM, DBF1, FINF for each pulse of the monitor signal, corresponding respectively to a predetermined number of the received clock pulses HC ;
· the flag TM defining a dead time during which the monitor signal SM may have any state ;
· the flag DBF1 defining the minimum authorized period ;
· the flag FINF defining the maximum authorized period ;
and by the fact that it further comprises an event monitor (400) receiving the flags TM, DBF1, FINF and the monitor signal SM, which verifies that the monitor signal SM :
· is at low logic level when the flag TM representing dead time is enable, and, if not, it generates a signal RESET ;
· does not switch to high level until the flag DBF1 representing the minimum authorized period has been enabled, and otherwise it generates a signal RESET ;
· switches to high level after the flag DBF1 representative of the minimum authorized period has been enabled and before the flag FINF representative of the maximum authorized period has been enabled, in which case it clears the counter (300) and
· generates a signal RESET if the flag FINF representative of the maximum authorized period is enabled prior to the monitor signal SM switching to the high state.

2. A monitoring circuit according to claim 1, characterized by the fact that the frequency divider (200) includes a set of bistables (211 to 218) connected in cascade to divide the driving signal OSLOW generated by the oscillator (100), and a set of logic gates constituting a multiplexer (250) forming a logical combination of the outputs from the bistables (211 to 218) and a programming word V1, V2, V3 in order to generate the clock signal HC.

3. A monitoring circuit according to claim 2, characterized by the fact that the programming word V1, V2, V3 is a three-bit word.

4. A monitoring circuit according to any one of claims 1 to 3, characterized by the fact that the frequency divider (200) also delivers an auxiliary clock signal PHI1 whose frequency corresponds to the frequency of the driving signal divided by a fixed value.

5. A monitoring circuit according to any one of claims 1 to 4, characterized by the fact that the counter (300) includes a set of bistables (301 to 315 connected in cascade to divide the frequency of the clock signal HC, and storage means (330, 331 ; 332, 333) suitable for storing the changes in state of selected ones of the bistables (310, 313).

6. A monitoring circuit according to claim 5, characterized by the fact that the storage means comprises pairs of logic gates (330, 331 ; 332, 333).

7. A monitoring circuit according to one of claims 1 to 6, characterized by the fact that the time lapse between a clear signal RAZ and the enabling of a flag DBF1 representing the minimum authorized period is equal to a multiple of time lapse between the same clear signal RAZ and the enabling of a flag TM representing dead time.

8. A monitoring circuit according to claim 7, characterized by the fact that the time lapse between the clear signal RAZ and the flag DBF1 being enable is equal to eight times the time lapse between the same clear signal RAZ and the flag TM being enabled.

9. A monitoring circuit according to any one of claims 1 to 8, characterized by the fact that the time lapse between a clear signal RAZ and the enabling of a flag FINF representing the maximum authorized period is equal to a multiple of time lapse between the same clear signal RAZ and the enabling of a flag DBF1 representing the minimum authorized period.

10. A monitoring circuit according to claim 9, characterized by the fact that the time lapse between the clear signal RAZ and the flag FINF being enable is selectively equal to twice or four times the time lapse between the same clear signal RAZ and the flag DBF1 being enabled.

11. A monitoring circuit according to claim 10, characterized by the fact that the selection of the time lapse for the maximum authorized period is performed by the logic state of an input TL to the circuit.

12. A monitoring circuit according to any one of claims 1 to 11, characterized by the fact that the event monitor (400) includes gates forming a logical combination of the monitor signal SM and of the flags TM, DBF1 and FINF.

13. A monitoring circuit according to any one of claims 1 to 12, characterized by the fact that the event monitor (400) includes an input SDR for generating a priority signal RESET.

14. A monitoring circuit according to any one of claims 1 to 13, characterized by the fact that the event monitor (400) includes an input MV suitable for inhibiting monitoring of the monitor signal SM.

15. A monitoring circuit according to claim 14, characterized by the fact that the event monitor (400) includes an input DR suitable for generating a signal RESET whenever the input MV inhibits monitoring of the monitor signal SM.
